(19) Europäisches Patentamt
European Patent Office
Office européen des brevets

(11) **EP 4 775 877 A1**

(12) **EUROPEAN PATENT APPLICATION**

(43) Date of publication:
**15.07.2026 Bulletin 2026/29**

(21) Application number: **25218952.7**

(22) Date of filing: **27.11.2025**

(51) International Patent Classification (IPC):
***F21V 8/00*** *(2006.01)* ***G02B 27/01*** *(2006.01)*

(52) Cooperative Patent Classification (CPC):
**G02B 6/0068; G02B 27/0101;** G02B 6/0028;
G02B 2027/0118

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.01.2025 US 202519020291**

(71) Applicant: **Distance Technologies Oy**
**00530 Helsinki (FI)**

(72) Inventors:
• **Konttori, Urho**
**00530 Helsinki (FI)**
• **Strandborg, Mikko**
**00530 Helsinki (FI)**
• **Savolainen, Petri**
**00530 Helsinki (FI)**

(74) Representative: **Moosedog Oy**
**Kurjenmäenkatu 10 B 49**
**20700 Turku (FI)**

(54) **NARROWBAND DISPLAY DEVICE WITH NARROWBAND REFLECTIVE OPTICAL COMBINER**

(57)     A system comprises a display device (102) that comprises a light-emitting unit (104) having red light sources, green light sources and blue light sources that are employed to respectively emit red light, green light and blue light of certain wavelengths, and a colour filter array (106) arranged on an optical path of the light-emitting unit, the colour filter array comprising red, green and blue colour filters. A semi-reflective surface (130) of an optical combiner (124) of the system has a multi-band reflective coating that is configured to selectively reflect the red light, the green light and the blue light of these certain wavelengths. An image, generated or retrieved by an at least one processor (108) of the system, is displayed via the display device for producing a synthetic light field (132). The optical combiner is employed to selectively reflect the synthetic light field towards eyes of user(s), whilst optically combining a real-world light field (126) with the synthetic light field.

FIG. 1E

**Description**

TECHNICAL FIELD

The present disclosure relates to systems for displaying images by employing narrowband display devices with narrowband reflective optical combiners. The present disclosure also relates to methods for displaying images by employing narrowband display devices with narrowband reflective optical combiners.

BACKGROUND

Heads-up displays (HUDs) that project images onto vehicle windshields or other transparent surfaces, such as windows, must operate effectively across a wide range of lighting conditions, from bright daylight to dimly-lit nighttime environments. A particularly challenging situation arises under extremely bright outdoor conditions, such as when ambient light intensity averages between 10,000 lux and 25,000 lux. This challenge is even more pronounced in aviation HUDs, where aircraft spend most of their flight time above cloud cover in direct sunlight, with light intensity reaching up to 100,000 lux.

In such challenging scenarios, conventional liquid crystal display (LCD)-based HUDs often struggle to achieve the brightness required to produce clear and legible images. This problem becomes more pronounced when an area on which images are projected is relatively large, for example, such as fields of view ranging from 20 degrees x 20 degrees to 60 degrees x 25 degrees, or more. In these cases, a limited number of light-emitting cells in the LCD-based HUD must distribute light over a larger projection area, reducing the overall brightness of the displayed images.

The challenge is further exacerbated in three-dimensional (3D) HUDs, where light field display units incorporate multiscopic optical elements (for example, such as parallax barriers, lenticular arrays, liquid crystal lens arrays, or similar) to produce an autostereoscopic effect. These optical elements inherently reduce the brightness of displayed images. The problem worsens in scenarios involving multiple users, as the division of light among the multiple users further diminishes the brightness. Combined with the limitations of conventional LCD-based HUDs, these multiscopic elements often fail to deliver the necessary brightness for legible and clear images.

Additionally, optical combiners used in conventional HUDs also contribute to brightness reduction. An optical combiner is typically designed to only partially reflect light wavelengths emitted by a display device, while allowing real-world light wavelengths (including said light wavelengths) to passthrough towards a user. This partial reflection diminishes the overall brightness of the displayed images. Typically, in automotive use cases, a transmissibility of a vehicle windshield must be at least 75 percent, in order to allow a driver to see the road and the traffic. Conversely, this means that a reflectivity of the optical combiner (that is implemented on such a vehicle windshield) can be at most 25 percent; as a result, at least 75 percent of the light emitted by the display device is not reflected towards the user, leading to light wastage and reduction in the overall brightness.

Notably, LCD displays currently achieve a maximum brightness of approximately 1,000 nits. However, multiscopic optical elements and optical combiners can reduce this brightness by factors of 2x to 4x, resulting in a synthetic light field that reaches the user's eyes at a mere 100 nits. Such low brightness levels hinder the user's ability to discern fine visual details and perceive accurate colors in the displayed images, leading to eyestrain and reduced usability. This challenge is particularly critical in applications requiring clear 3D visualization, as users may struggle to interpret the visual scene effectively.

Therefore, in light of the foregoing discussion, there exists a need to overcome the aforementioned problems.

SUMMARY

The present disclosure seeks to provide a system and a method for displaying images, whilst optionally facilitating high-quality autostereoscopy and multiscopy, even in bright outdoor lighting conditions and even with a relatively wide field of view (for example, in a range of 20 degrees x 20 degrees to 60 degrees x 25 degrees, or more). The aim of the present disclosure is achieved by a system and a method for displaying images that employ a narrowband display device with a narrowband reflective optical combiner, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

BRIEF DESCRIPTION OF THE DRAWINGS

FIGs. 1A-1C are simplified exploded views of a display device, in accordance with different embodiments of the present disclosure;

FIG. 1D depicts a bottom view of the display device, in accordance with a specific example implementation;

FIG. 1E depicts an exemplary environment in which a system for displaying images can be employed, in accordance with an embodiment of the present disclosure; and

FIG. 2 depicts steps of a method for displaying images, in accordance with an embodiment of the present disclosure.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:

a display device comprising:

a light-emitting unit comprising:

a plurality of red light sources employed to emit red light having at least one first wavelength corresponding to red colour;

a plurality of green light sources employed to emit green light having at least one second wavelength corresponding to green colour; and

a plurality of blue light sources employed to emit blue light having at least one third wavelength corresponding to blue colour; and

a colour filter array arranged on an optical path of the light-emitting unit, the colour filter array comprising:

red colour filters whose wavelength band includes the at least one first wavelength;

green colour filters whose wavelength band includes the at least one second wavelength; and

blue colour filters whose wavelength band includes the at least one third wavelength;

an optical combiner arranged on an optical path of the display device and on an optical path of a real-world light field of a real-world environment, wherein a semi-reflective surface of the optical combiner has a multi-band reflective coating that is configured to selectively reflect the red light having the at least one first wavelength, the green light having the at least one second wavelength, and the blue light having the at least one third wavelength; and

at least one processor configured to:

generate or retrieve an image to be displayed via the display device; and

display the image via the display device, for producing a synthetic light field, wherein the optical combiner is employed to selectively reflect the synthetic light field towards eyes of at least one user, whilst optically combining the real-world light field with the synthetic light field.

In a second aspect, an embodiment of the present disclosure provides a method comprising:

generating or retrieving an image to be displayed via a display device, the display device comprising a light-emitting unit and a colour filter array arranged on an optical path of the light-emitting unit, wherein the light-emitting unit comprises a plurality of red light sources, a plurality of green light sources, and a plurality of blue light sources, and wherein the colour filter array comprises red colour filters whose wavelength band includes at least one first wavelength corresponding to red colour, green colour filters whose wavelength band includes at least one second wavelength corresponding to green colour, and blue colour filters whose wavelength band includes at least one third wavelength corresponding to blue colour;

displaying the image via the display device, for producing a synthetic light field, by:

emitting, from the plurality of red light sources, red light having the at least one first wavelength;

emitting, from the plurality of green light sources, green light having the at least one second wavelength; and

emitting, from the plurality of blue light sources, blue light having the at least one third wavelength; and

employing an optical combiner, arranged on an optical path of the display device and on an optical path of a real-world light field of a real-world environment, to selectively reflect the synthetic light field towards eyes of at least one user, whilst optically combining the real-world light field with the synthetic light field, wherein a semi-reflective surface of the optical combiner has a multi-band reflective coating that is configured to selectively reflect the red light having the at least one first wavelength, the green light having the at least one second wavelength, and the blue light having the at least one third wavelength.

The present disclosure describes the aforementioned system and the aforementioned method that are capable of displaying images with exceptionally high brightness, making them particularly well-suited for implementation in a heads-up display (HUD), which may be implemented as a two-dimensional (2D) HUD or a three-dimensional (3D) HUD (namely, pertaining to autostereoscopy and multiscopy). This high brightness is achieved through a synergistic configuration of a "narrowband" display device and a "narrowband reflective" optical combiner. The display device operates within a narrowband spectrum of wavelengths, producing a synthetic light field limited to this narrowband spectrum. Specifically, the display device emits light of specific wavelengths corresponding to key primary colors, including: the at least one first wavelength corresponding to the red colour, the at least one second wavelength corresponding to the green colour, and the at least one third wavelength corresponding to the blue colour. Similarly, the optical combiner is configured to function reflectively within the same narrowband spectrum. The semi-reflective surface of the optical combiner incorporates the multi-band reflective coating, which selectively reflects the synthetic light field that is limited to the aforesaid narrowband spectrum, while allowing other wavelengths to pass through the optical combiner. This ensures that a significant percentage (for example, up to 95 percent, or even more) of the synthetic light field is reflected towards the user, presenting clear, vivid and highly-bright images. The technical effect of such a synergistic configuration is two-fold. First, it allows the user to view the displayed images with superior brightness and clarity. Second, it ensures that the real-world environment remains visible through the optical combiner, with minimal compromise to the transmission of ambient light. This balance is achieved because the optical combiner selectively reflects only the narrowband spectrum of wavelengths used by the display device, while allowing the other wavelengths of the real-world light field to pass through unimpeded. Consequently, the system and the method provide a seamless blend of virtual content and real-world visibility, enhancing user experience and situational awareness. The system and the method also minimise eyestrain and enhance usability, allowing users to effortlessly perceive 3D visual scenes.

Pursuant to embodiments of the present disclosure, the system and the method allow for presenting virtual content legibly, even in bright outdoor lighting conditions (for example, when the average intensity of ambient light lies in a range of 10,000 lux to 100,000 lux) and even with a relatively wide field of view (for example, in a range of 20 degrees x 20 degrees to 60 degrees x 25 degrees, or even more). While the system and the method are well-suited for implementation in an HUD, it is important to note that their application is not limited to HUDs alone. They can also be adapted for use in other types of display systems. Examples of such display systems include, but are not limited to, augmented-reality (AR) glasses, mixed-reality (MR) headsets, wearable displays (for example, such as smart helmets or smart bands), and automotive displays (for example, such as rear-view mirror displays).

For illustration purposes, there will now be described how the system and the method work to achieve the aforementioned technical benefits. When displaying the image, various components of the display device operate as follows:

(1) The light-emitting unit is controlled to produce white light by additive mixing of the primary colours of the specific wavelengths, which include: the at least one first wavelength corresponding to the red colour, the at least one second wavelength corresponding to the green colour, and the at least one third wavelength corresponding to the blue colour.

(2) The white light has no specific colour. Hence, the colour filter array (CFA) is employed to filter the white light to produce coloured light. The CFA comprises colour filters of the primary colours whose wavelength band includes respective ones of the specific wavelengths. Thus, the red colour filters allow the red light having the at least one first wavelength to pass therethrough; similarly, the green colour filters allow the green light having the at least one second wavelength to pass therethrough; likewise, the blue colour filters allow the blue light having the at least one third wavelength to pass therethrough. A size of a colour filter defines a size of a sub-pixel that can be displayed by the display device.

(3) In some implementations, the light-emitting unit can be controllable to modulate an intensity of the light on a per-region basis. In this regard, a given region could correspond to a given pixel or a given group of neighbouring pixels. In such implementations, the plurality of red light sources, the plurality of green light sources and the plurality of blue light sources may be arranged in a form of an array, wherein individual ones of the plurality of red light sources, individual ones of the plurality of green light sources and individual ones of the plurality of blue light sources span across an entirety of the light-emitting unit. In such a case, red light sources, green light sources and blue light sources in the given region of the light-emitting unit can be controlled individually, to modulate the intensity of light produced by the given region of the light-emitting unit.

In other implementations, the display device could comprise an active panel comprising:

a liquid crystal (LC) layer comprising a plurality of LC cells;

a linear polarizer arranged on an optical path of the LC layer; and

a first drive circuit employed to individually control the plurality of LC cells of the LC layer.

Individual LC cells (or individual groups of neighbouring LC cells) of the LC layer can be controlled, via the first drive circuit, to modulate the intensity of the light passing therethrough. Both these implementations allow for producing colours at different intensities.

Correspondingly, in the optical combiner, the semi-reflective surface has the multi-band reflective coating that is configured to selectively reflect the light of the specific wavelengths (which include: the at least one first wavelength corresponding to the red colour, the at least one second wavelength corresponding to the green colour, and the at least one third wavelength corresponding to the blue colour). By "selectively reflecting", it means that the multi-band reflective coating is configured to reflect a relatively large percentage (for example, up to 95 percent, or even more) of the light of these specific wavelengths, which constitute the light produced by the display device. This is unlike conventional optical combiners in automotive HUDs, which allow at least 75 percent of the real-world light field (having light of all visible wavelengths) to pass through, while blocking at most 25 percent of the real-world light field. Being selectively reflective for the light of the specific wavelengths, the optical combiner only transmits a relatively small percentage (for example, as low as 5 percent, or even less) of that portion of the real-world light field that corresponds to these specific wavelengths. Most importantly, the optical combiner transmits a relatively large percentage (for example, up to 95 percent, or even more) of a remaining portion of the real-world light field that does not correspond to the aforementioned specific wavelengths. Notably, this remaining portion of the real-world light field is a major chunk of the real-world light field, as compared to that portion of the real-world light field that corresponds to the aforementioned specific wavelengths. In other words, the overall transmissibility of a vehicle windshield can be more than 75 percent, while allowing the optical combiner to still be highly reflective (namely, up to 95 percent, or even more) for the specific wavelengths emitted by the display device. This allows the user to see the displayed image as well as the real-world environment clearly.

As an example, the at least one first wavelength, the at least one second wavelength and the at least one third wavelength could be 640 nanometres, 532 nanometres and 445 nanometres, respectively. In such a case, the display device would produce the light of these specific wavelengths (namely, 640 nm, 532 nm and 445 nm) only. As the multi-band reflective coating (on the semi-reflective surface of the optical combiner) is configured to selectively reflect the light of the specific wavelengths, it reflects a relatively large percentage of the light of the specific wavelengths (namely, 640 nm, 532 nm and 445 nm) towards the user. This allows the user to see the displayed image clearly. As a side effect, the optical combiner impedes the transmission of that portion of the real-world light field that corresponds to these specific wavelengths (namely, 640 nm, 532 nm and 445 nm) at least partially. However, as many other wavelengths (namely, wavelengths other than 640 nm, 532 nm and 445 nm) can pass through the optical combiner unimpeded, the user is able to see the real-world environment clearly.

Furthermore, it will be appreciated that in some implementations, the at least one first wavelength is a single first wavelength of the red colour; in other implementations, the at least one first wavelength is a plurality of first wavelengths of the red colour. Likewise, in some implementations, the at least one second wavelength is a single second wavelength of the green colour; in other implementations, the at least one second wavelength is a plurality of second wavelengths of the green colour. Similarly, in some implementations, the at least one third wavelength is a single third wavelength of the blue colour; in other implementations, the at least one third wavelength is a plurality of third wavelengths of the blue colour.

In a specific implementation where the display device is configured to produce light having a single wavelength of at least one of the primary colours (namely, the red colour, the green colour and the blue colour), certain considerations can be made to avoid a situation in which a critical portion of a real-world light field that corresponds to this single wavelength (of the at least one of the primary colours) is not visible to the user through the optical combiner, due to reduced transmission of this single wavelength through the optical combiner. Optionally, in this regard, the at least one first wavelength comprises two or more first wavelengths corresponding to the red colour, wherein the multi-band reflective coating is configured to reflect each of the two or more first wavelengths partially. Optionally, the at least one second wavelength comprises two or more second wavelengths corresponding to the green colour, wherein the multi-band reflective coating is configured to reflect each of the two or more second wavelengths partially. Optionally, the at least one third wavelength comprises two or more third wavelengths corresponding to the blue colour, wherein the multi-band reflective coating is configured to reflect each of the two or more third wavelengths partially.

A technical benefit of configuring the multi-band reflective coating to partially reflect each of two or more wavelengths of a given primary colour (instead of fully reflecting a single wavelength of the given primary colour) is that each of these two or more wavelengths of the given primary colour are reflected only partially, thereby allowing transmission of that portion of the real-world light field that corresponds to each of the two or more wavelengths of the given primary colour through the optical combiner. This allows the user to see each of the two or more wavelengths of the given primary colour when they are present in the real-world light field (that passes through the optical combiner towards the user). Herein, the given primary colour encompasses the red colour, the green colour and the blue colour.

For illustration purposes, there will now be described how various components of the aforementioned system can be implemented. The at least one processor of the system controls an overall operation of the system. The at least one processor is communicably coupled to the display device. Optionally, the at least one processor is implemented as a processor of the display device. The processor of the display device can be implemented as any one of: a microprocessor, a controller, a microcontroller. As an example, the processor can be implemented as a reduced instruction set computer (RISC) microprocessor, an application-specific integrated circuit (ASIC) microprocessor, or similar. Alternatively, optionally, the at least one processor is implemented as a processor of a computing device that is communicably coupled to the display device. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

The light-emitting unit can be implemented in various ways that are well-known in the art. For brevity, some of the various ways will now be described only briefly, without limiting the light-emitting unit to such implementations only. In a first example implementation, the plurality of red light sources, the plurality of green light sources and the plurality of blue light sources are arranged in a form of an array. Individual ones of the plurality of red light sources, individual ones of the plurality of green light sources and individual ones of the plurality of blue light sources span across an entire region of the light-emitting unit. In such an implementation, a given light source can be implemented as any one of: a light-emitting diode (LED), a mini-LED, a micro-LED, an organic LED (OLED). Such array arrangements are well-known in the art.

Optionally, in the first example implementation, the display device comprises the active panel comprising: the LC layer comprising the plurality of LC cells; the linear polarizer arranged on the optical path of the LC layer; and the first drive circuit employed to individually control the plurality of LC cells of the LC layer. In this regard, when displaying the image, the at least one processor is configured to:

generate drive signals for controlling the plurality of LC cells of the LC layer in the active panel, based on the image; and

send the drive signals to the first drive circuit of the active panel, wherein the plurality of LC cells of the LC layer are controlled individually by the first drive circuit using the drive signals, to adjust a polarization of light passing therethrough. This allows for modulating the intensity of the light passing through individual ones of these LC cells.

Alternatively, optionally, in the first example implementation, the plurality of red light sources, the plurality of green light sources and the plurality of blue light sources are individually controllable. In this regard, a given light source of a given colour can be controlled to adjust the intensity of light emitted by the given light source. The given colour encompasses the red colour, the green colour and the blue colour. The light sources can be controlled by a second drive circuit. In this regard, when displaying the image, the at least one processor is configured to:

generate drive signals for controlling individual ones of the plurality of red light sources, individual ones of the plurality of green light sources and individual ones of the plurality of blue light sources, based on the image; and

send the drive signals to the second drive circuit.

In a second example implementation, the light-emitting unit is implemented as an edge-lit backlight unit. In such an implementation, the plurality of red light sources, the plurality of green light sources and the plurality of blue light sources are arranged at one or more edges of a light guide plate (LGP). These light sources emit light into the LGP, which then distributes the light uniformly across an entire region of the backlight unit. A given light source can be implemented as any one of: an LED, a mini-LED, a micro-LED, an OLED, a laser. Such edge-lit backlight units are well-known in the art.

In the second example implementation, the display device comprises the active panel comprising: the LC layer comprising the plurality of LC cells; the linear polarizer arranged on the optical path of the LC layer; and the first drive circuit employed to individually control the plurality of LC cells of the LC layer. When displaying the image, the at least one processor is configured to:

generate drive signals for controlling the plurality of LC cells of the LC layer in the active panel, based on the image; and

send the drive signals to the first drive circuit of the active panel, wherein the plurality of LC cells of the LC layer are controlled individually by the first drive circuit using the drive signals, to adjust a polarization of light passing therethrough. This allows for modulating the intensity of the light passing through individual ones of these LC cells.

In a third example implementation, the plurality of red light sources, the plurality of green light sources and the plurality of blue light sources are implemented as a plurality of red laser light sources, a plurality of green laser light sources and a plurality of blue laser light sources, respectively, wherein the light-emitting unit further comprises a light guide employed to guide the red light, the green light and the blue light towards the colour filter array. The light guide beneficially mixes and homogenises the red light, the green light and the blue light to produce the white light. The white light is then guided towards the colour filter array, namely along the optical path of the light-emitting unit.

In the third example implementation, the display device further comprises the active panel comprising: the LC layer comprising the plurality of LC cells; the linear polarizer arranged on the optical path of the LC layer; and the first drive circuit employed to individually control the plurality of LC cells of the LC layer. When displaying the image, the at least one processor is configured to:

generate drive signals for controlling the plurality of LC cells of the LC layer in the active panel, based on the image; and

send the drive signals to the first drive circuit of the active panel, wherein the plurality of LC cells of the LC layer are controlled individually by the first drive circuit using the drive signals, to adjust a polarization of light passing therethrough. This allows for modulating the intensity of the light passing through individual ones of these LC cells.

It will be appreciated that implementations involving lasers may be preferred due to their ability to produce high brightness, sharp images, and vibrant colors, which are crucial for the visibility and effectiveness of HUDs. However, non-laser based implementations are also able to produce high brightness and sharp images suitable for HUDs, due to high reflectivity of the synthetic light field (having the specific wavelengths) by the narrowband reflective optical combiner.

Moreover, optionally, in the third example implementation, a given laser light source is configured to emit light having a polarization orientation that is different from a polarization orientation of the linear polarizer. In such implementations, a given LC cell can be controlled by taking into consideration a difference between the polarization orientation of the emitted light and the polarization orientation of the linear polarizer. It will be appreciated that light emitted by laser light sources are typically already polarized. One example of such laser light sources is semiconductor lasers (for example, such as laser diodes). Various ways to perform such configuring are well-known in the art.

It will be appreciated that a technical benefit of configuring the given laser light source to emit the light having the polarization orientation that is different from the polarization orientation of the linear polarizer is that an overall brightness of the display device is enhanced, as compared to an alternative implementation where another linear polarizer is arranged to polarize an unpolarized light. This is because when unpolarized light passes through the another linear polarizer, almost 50 percent of the brightness is lost. However, when the light emitted by the given laser light source is already polarized, there is no need to employ the another linear polarizer.

Alternatively, optionally, the active panel further comprises another linear polarizer having another polarization orientation that is different from the polarization orientation of the linear polarizer, and wherein the LC layer is arranged between the linear polarizer and the another linear polarizer. Accordingly, a given LC cell can be controlled by taking into consideration a difference between the another polarization orientation of the another linear polarizer and the polarization orientation of the linear polarizer. It will be appreciated that in such implementations, various components of the display device may be arranged (along the optical path) as follows:

laser light sources -> light guide -> another linear polarizer -> LC layer -> linear polarizer

It will be appreciated that the CFA can be arranged anywhere on the optical path after the light guide. Optionally, the CFA is arranged adjacent to the LC layer, between the LC layer and the linear polarizer. By "adjacent", it is meant that there is a negligible gap between the CFA and the LC layer. A technical benefit of such an arrangement of the CFA is that there is no sub-pixel light leakage in the display device. This eliminates crosstalk (between sub-pixels and pixels), thereby eliminating any ghosting artefacts.

Furthermore, optionally, in the third example implementation, the plurality of red laser light sources, the plurality of green laser light sources and the plurality of blue laser light sources are arranged together as a single group in a proximity of an edge of the light guide, wherein the light-emitting unit further comprises a spread-out waveguide that is employed to spread the red light, the green light and the blue light across the edge of the light guide. A technical benefit of combining the laser light sources into the single group and utilising the spread-out waveguide is that the light-emitting unit can achieve high brightness with fewer laser light sources. This is possible because the laser light sources generate exceptionally bright light, which, when distributed across the edge of the light guide, illuminates an entirety of the light-emitting unit with high-intensity brightness.

Alternatively, optionally, the plurality of red laser light sources, the plurality of green laser light sources and the plurality of blue laser light sources are arranged as a plurality of groups, each group comprising at least one of the plurality of red laser light sources, at least one of the plurality of green laser light sources and at least one of the plurality of blue laser light sources. A technical benefit of employing the plurality of groups of the laser light sources is that the overall brightness of the display device can be scaled according to a size of an area of the optical combiner on which images are to be projected. This allows for displaying clear and vivid images to the user, without a need to compromise on the size of the area of the optical combiner on which the images are to be projected.

Optionally, in this regard, the plurality of groups are arranged in a side-by-side manner. The plurality of groups can be beneficially arranged in a manner that individual ones of the plurality of red laser light sources, individual ones of the plurality of green laser light sources and individual ones of the plurality of blue laser light sources are arranged in an interleaved manner. Some examples of such an interleaved arrangement of the laser light sources of different colours are represented as follows:

(a) R G B RG B R G B RG B...

(b) R B G R B G R B G R B G...

(c) R RG G B B R R G G B B...

(d) R R B B G G R R B B G G...

Such an interleaved arrangement has several technical benefits. First, it allows for uniform mixing and distributing of the red light, the green light and the blue light across the light guide. This eliminates colour hotspots and colour fringing, thereby facilitating a smooth and even white light distribution. Second, it allows the laser light sources to be packed tightly along one or more edges of the light guide. This allows for making the display device compact and thin, which is critical for space-constrained environments, for example such as HUDs. Third, it maximises the coupling of light into the light guide, by minimising light loss, as compared to non-interleaved or uneven arrangements. This improves an overall luminous efficiency of the light-emitting unit. Fourth, it reduces a need for any complex optical structures to compensate for non-uniform light distribution.

Moreover, optionally, at least two of the plurality of groups are arranged at different edges of the light guide. In such a case, the light guide has multiple light inlets arranged at respective ones of the different edges. Arranging the groups of the laser light sources at the different edges of the light guide has several technical benefits. First, the light enters the light guide from multiple directions, which ensures more even distribution of the light across an entirety of the light guide. This eliminates brightness and colour gradients that might occur with light sources concentrated along a single edge. Second, using multiple edges effectively increases a total light input into the light guide, thereby enhancing the overall luminance. This also prevents dimming that could occur at areas that are farthest from a single-edge source, resulting in a more uniformly bright display. Third, light traveling long distances in the light guide (from a single-edge source) may lose intensity due to scattering and absorption. Multiple-edge sources reduce these losses by introducing light closer to distant regions. Fourth, it supports light guide designs for curved displays, whilst ensuring consistent performance. Notably, such curved displays are well-suited to be mounted on curved portions of vehicle dashboards.

Irrespective of the implementation of the light-emitting unit, the light sources of the light-emitting unit are configured to emit light having respective ones of the specific wavelengths. Specifically, a red light source is configured to emit light having an individual one of the at least one first wavelength corresponding to the red colour. Optionally, when the at least one first wavelength comprises the two or more first wavelengths, different red light sources are configured to emit light having respective ones of the two or more first wavelengths. Likewise, a green light source is configured to emit light having an individual one of the at least one second wavelength corresponding to the green colour. Optionally, when the at least one second wavelength comprises the two or more second wavelengths, different green light sources are configured to emit light having respective ones of the two or more second wavelengths. Similarly, a blue light source is configured to emit light having an individual one of the at least one third wavelength corresponding to the blue colour. Optionally, when the at least one third wavelength comprises the two or more third wavelengths, different blue light sources are configured to emit light having respective ones of the two or more third wavelengths.

Such configuring of the light sources to emit light having respective ones of the specific wavelengths is well known in the art. As an example, in case of OLEDs, organic materials that are used in OLED layers can be selected based on their ability to emit light at specific, narrow wavelengths corresponding to red, green, and blue. In this regard, multiple OLED layers can be stacked together, wherein each OLED layer can be configured to emit a specific narrowband of light, by controlling a thickness and a composition of said OLED layer. Specifically, phosphorescent OLEDs (PhOLEDs) are known to be more efficient at converting electrical energy into light and can be designed to emit light at specific narrow wavelengths.

As another example, inorganic LEDs (such as LEDs, mini-LEDs and micro-LEDs) are made from inorganic semiconductor materials, typically gallium nitride (GaN) for blue and green, and gallium arsenide (GaAs) or gallium phosphide (GaP) for red. These inorganic semiconductor materials can be selected based on their ability to emit light at specific, narrow wavelengths corresponding to red, green, and blue. Moreover, an emission wavelength of each inorganic LED can be precisely controlled by engineering a bandgap of its inorganic semiconductor material. This allows the inorganic LEDs to emit very narrow bands of red, green, and blue light, corresponding to the specific energy levels of the inorganic semiconductor materials used.

As yet another example, a given laser light source produces light at a single wavelength or a very narrow range of wavelengths around a central wavelength, depending on a type of laser employed. This very narrow range of wavelengths is commonly known as a laser linewidth. For most laser light sources, the laser linewidth is typically on an order of a few nanometres (namely, 5 nm to 10 nm, or even less). The laser light sources can be implemented as diode lasers.

Throughout the present disclosure, the term "active panel" refers to an LC-based panel. The LC layer of the active panel is encased between a first substrate and a second substrate. At least one first electrode is deposited on the first substrate and disposed between the LC layer and the first substrate, while a plurality of second electrodes are deposited on the second substrate and disposed between the LC layer and the second substrate. The first drive circuit comprises electronic circuit components for controlling respective ones of the plurality of LC cells. These electronic circuit components could be implemented as at least one of: thin-film transistor (TFT) switches, metal-oxide-semiconductor field-effect transistor (MOSFET) switches, programmable resistors, programmable inductors, programmable capacitors. The electronic circuit components are electrically connected to respective ones of the plurality of second electrodes. Each LC cell has a respective electronic circuit component that controls a voltage applied to a respective one of the plurality of second electrodes. The at least one first electrode could be electrically connected to an electrical ground or a common electrical plane.

The optical combiner can be implemented as at least a part of a windshield or other windows of a vehicle. By "at least a part", it is meant that the optical combiner can also be implemented as an entirety of the windshield or the other windows. This allows the system to be implemented as an HUD in the vehicle. The optical combiner could be implemented as at least one of: a lens, a mirror, a semi-transparent mirror, a semi-transparent film, a semi-transparent flexible membrane, a prism, a beam splitter, an optical waveguide, a polarizer. Optionally, a tilt angle of the optical combiner with respect to an image plane of the display device lies in a range of 10 degrees and 75 degrees.

As mentioned earlier, the multi-band reflective coating (on the semi-reflective surface of the optical combiner) is configured to selectively reflect the red light having the at least one first wavelength, the green light having the at least one second wavelength, and the blue light having the at least one third wavelength. Such configuration can be performed using various techniques that are well-known in the art. For brevity, some of the various techniques will now be described only briefly, without limiting the configuration of the multi-band reflective coating to such techniques. As an example, the multi-band reflective coating can be implemented as a multi-band dichroic mirror. Based on the specific wavelengths for which the multi-band reflective coating is to be configured to be selectively reflective, one or more of the following considerations can be made:

(1) Material Selection: Materials with appropriate refractive indices are selected to create high refractive-index and low refractive-index layers. Examples of such materials include, but are not limited to:

Titanium dioxide (TiO2): for high refractive index.
Silicon dioxide (SiO2): for low refractive index.

(2) Layer Design: A multi-layer stack of alternating layers of high refractive-index and low refractive index materials can be made.

(3) Quarter-Wave Layers: For an individual one of the specific wavelengths, some of the layers in the multi-layer stack are designed to have a thickness of a quarter of the individual one of the specific wavelengths.

(4) Tuning Layers: The thickness of the layers is adjusted, to create constructive interference for the individual one of the specific wavelengths, thereby enhancing reflection of the individual one of the specific wavelengths. Such an adjustment creates destructive interference for other wavelengths, thereby minimising reflection of the other wavelengths.

(5) Optimizing Reflective Coating: The thickness and the number of layers in the multi-layer stack can be adjusted to optimize the reflectance for each of the specific wavelengths.

(6) Angle Dependence: The multi-band reflective coating is tested at a range of angles of incidence at which it is intended to work.

A technical benefit of implementing the multi-band reflective coating as the multi-band dichroic mirror is that it allows for high efficiency reflectivity for target wavelengths (namely, the aforementioned specific wavelengths).

Furthermore, optionally, the system further comprises tracking means and a multiscopic optical element arranged on the optical path of the display device, wherein the at least one processor is configured to:

determine a relative location of a first eye and of a second eye of the at least one user with respect to the optical combiner, by utilising the tracking means, wherein the image is a light field image that is generated or retrieved based on the relative location of the first eye and of the second eye of the at least one user with respect to the optical combiner; and

control the multiscopic optical element, based on the relative location of the first eye and of the second eye of the at least one user with respect to the optical combiner, to direct light corresponding to a first set of pixels and a second set of pixels of the light field image to produce a first part and a second part of the synthetic light field, respectively, for the first eye and the second eye of the at least one user.

This allows the system to be implemented as a 3D HUD. In some implementations, the at least one user is a single user. In other implementations, the at least one user is a plurality of users. It will be appreciated that the step of determining the relative location, the step of generating or retrieving the image, and the step of controlling the multiscopic optical element have been described with respect to an individual one of the at least one user. This means that these steps can be performed similarly for each individual one of the at least one user (including a case of the plurality of users).

Throughout the present disclosure, the term *"tracking means"* refers to specialised equipment for detecting and/or following a location of eyes of a given user. The given user encompasses each individual one of the at least one user. Optionally, the tracking means is implemented as at least one tracking camera. The at least one tracking camera may comprise at least one of: at least one visible-light camera, at least one infrared (IR) camera, at least one depth camera. Examples of a given visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of a given depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera, and the at least one depth camera) may be utilised in the tracking means. When different types of images captured by the various different types of tracking cameras are utilised, a location of the user's eyes can be determined highly accurately, as results obtained from one type of image can be used to refine results obtained from another type of image. Herein, these different types of images constitute tracking data collected by the tracking means, and may be in the form of at least one of: visible-light images, IR images, depth images.

It will be appreciated that the at least one tracking camera is arranged to face the given user, to facilitate tracking of the location of the eyes of the given user. A relative location of the at least one tracking camera with respect to the optical combiner is pre-known. This enables to determine the relative location of the eyes of the given user with respect to the optical combiner. Optionally, in this regard, when the tracking means are utilised to detect and/or follow the location of the eyes of the given user, a location of the eyes of the given user with respect to the at least one tracking camera is accurately known. Thus, the relative location of the eyes of the given user with respect to the optical combiner can be determined, based on the relative location of the at least one tracking camera with respect to the optical combiner, and the location of the eyes of the given user with respect to the at least one tracking camera. Such a determination may utilise a coordinate geometry-based technique and/or a trigonometry-based technique. It will be appreciated that in autostereoscopic and multiscopic implementations of the system, the tracking means tracks the eyes of the given user with a significantly high accuracy and precision, such that an error in determining the relative location may, for example, be minimised to within a tolerance range of approximately (+/-) 8 millimetres.

As mentioned earlier, the light field image is generated or retrieved based on the relative location of the first eye and of the second eye of the at least one user with respect to the optical combiner. The light field image may be understood to be a 2D image comprising a plurality of pixels, wherein the first set of pixels from amongst the plurality of pixels is responsible for generating the first part of the synthetic light field that corresponds to the first eye of the at least one user, and the second set of pixels from amongst the plurality of pixels is responsible for generating the second part of the synthetic light field that corresponds to the second eye of the at least one user. It will be appreciated that the pixels belonging to the first set are not arranged in a continuous manner across the light field image; similarly, the pixels belonging to the second set are also not arranged in a continuous manner across the light field image. Optionally, the pixels belonging to the first set and the pixels belonging to the second set are arranged in alternating vertical stripes across a horizontal field of view of the light field image, wherein each vertical stripe comprises one or more lines of pixels. This is because humans perceive depth mainly based on horizontal binocular parallax. Thus, in this way, the light field image would be considerably different as compared to a conventional 2D image that is displayed via conventional 2D displays, because the same light field image would comprise visual information corresponding to the first eye as well as the second eye of the at least one user.

In this regard, the light field image can be generated from a first image and a second image that are to be presented to the first eye and the second eye of the at least one, respectively. In some implementations, the at least one processor is configured to generate the first image and the second image from a perspective of the relative location of the first eye and of the second eye of the at least one user with respect to the optical combiner, by employing a 3D model of at least one virtual object. It will be appreciated that the relative location of the first eye and of the second eye with respect to the optical combiner indicates a viewing direction of the first eye and a viewing direction of the second eye, respectively. Therefore, the first image and the second image are generated based on these viewing directions. Hereinabove, the term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, and a virtual information. The term *"three-dimensional model"* of the at least one virtual object refers to a data structure that comprises comprehensive information pertaining to the at least one virtual object. Such a comprehensive information is indicative of at least one of: a plurality of features of the at least one virtual object or its portion, a shape and a size of the at least one virtual object or its portion, a pose of the at least one virtual object or its portion, a material of the at least one virtual object or its portion, a colour and an optical depth of the at least one virtual object or its portion. The 3D model may be generated in the form of a 3D polygonal mesh, a 3D point cloud, a 3D surface cloud, a voxel-based model, or similar. Optionally, the at least one processor is configured to store the 3D model at a data repository that is communicably coupled to the at least one processor. The data repository may be implemented as a memory of the at least one processor, a cloud-based database, or similar. In other implementations, the at least one processor is configured to obtain the first image and the second image in a form of 2D user interface (UI) elements. The 2D UI elements could pertain to, for example, a virtual navigation tool, a virtual gadget, a virtual message, a virtual entity, a virtual entertainment media, a virtual information, or similar.

In some implementations, the multiscopic optical element can be implemented as a part of the display device. In other implementations, the multiscopic optical element can be implemented as a separate element. Irrespective of whether the multiscopic optical element is implemented as a part of the display device or as a separate element, the multiscopic optical element can be implemented as a controllable lenticular array, a controllable parallax barrier, or similar. The controllable parallax barrier can be implemented as any one of: a switchable liquid crystal (LC) shutter array, a switchable LC barrier, a transparent/diffuse switchable film (for example, made of a polymer-dispersed liquid crystal (PDLC)). Controlling such multiscopic optical elements based on the relative location of the eyes is well-known in the art.

The present disclosure further relates to the method as described above. Various embodiments and variants disclosed above, with respect to the aforementioned first aspect, apply *mutatis mutandis* to the method.

Optionally, in the method, the at least one first wavelength comprises two or more first wavelengths corresponding to the red colour, wherein the multi-band reflective coating is configured to reflect each of the two or more first wavelengths partially. Optionally, in the method, the at least one second wavelength comprises two or more second wavelengths corresponding to the green colour, wherein the multi-band reflective coating is configured to reflect each of the two or more second wavelengths partially. Optionally, in the method, the at least one third wavelength comprises two or more third wavelengths corresponding to the blue colour, wherein the multi-band reflective coating is configured to reflect each of the two or more third wavelengths partially. A technical benefit of configuring the multi-band reflective coating to partially reflect each of two or more wavelengths of a given primary colour (instead of fully reflecting a single wavelength of the given primary colour) is that each of these two or more wavelengths of the given primary colour are reflected only partially, thereby allowing transmission of that portion of the real-world light field that corresponds to each of the two or more wavelengths of the given primary colour through the optical combiner. This allows the user to see each of the two or more wavelengths of the given primary colour when they are present in the real-world light field (that passes through the optical combiner towards the user).

In one implementation, the plurality of red light sources, the plurality of green light sources and the plurality of blue light sources are implemented as a plurality of red laser light sources, a plurality of green laser light sources and a plurality of blue laser light sources, respectively, wherein the light-emitting unit further comprises a light guide employed to guide the red light, the green light and the blue light towards the colour filter array, wherein the display device further comprises an active panel comprising:

a liquid crystal (LC) layer comprising a plurality of LC cells;

a linear polarizer arranged on an optical path of the LC layer; and

a first drive circuit employed to individually control the plurality of LC cells of the LC layer,

wherein the step of displaying the image comprises:

generating drive signals for controlling the plurality of LC cells of the LC layer in the active panel, based on the image;

sending the drive signals to the first drive circuit of the active panel; and

controlling, via the first drive circuit, individual ones of the plurality of LC cells of the LC layer using the drive signals, to adjust a polarization of light passing therethrough.

Optionally, the plurality of red laser light sources, the plurality of green laser light sources and the plurality of blue laser light sources are arranged together as a single group in a proximity of an edge of the light guide, wherein the light-emitting unit further comprises a spread-out waveguide that is employed to spread the red light, the green light and the blue light across the edge of the light guide.

Alternatively, optionally, the plurality of red laser light sources, the plurality of green laser light sources and the plurality of blue laser light sources are arranged as a plurality of groups, each group comprising at least one of the plurality of red laser light sources, at least one of the plurality of green laser light sources and at least one of the plurality of blue laser light sources. Optionally, in this regard, the plurality of groups are arranged in a side-by-side manner. Moreover, optionally, at least two of the plurality of groups are arranged at different edges of the light guide.

Furthermore, the method further comprises:

determining a relative location of a first eye and of a second eye of the at least one user with respect to the optical combiner, by utilising tracking means, wherein the image is a light field image that is generated or retrieved based on the relative location of the first eye and of the second eye of the at least one user with respect to the optical combiner; and

controlling a multiscopic optical element arranged on the optical path of the display device, based on the relative location of the first eye and of the second eye of the at least one user with respect to the optical combiner, to direct light corresponding to a first set of pixels and a second set of pixels of the light field image to produce a first part and a second part of the synthetic light field, respectively, for the first eye and the second eye of the at least one user.

DETAILED DESCRIPTION OF THE DRAWINGS

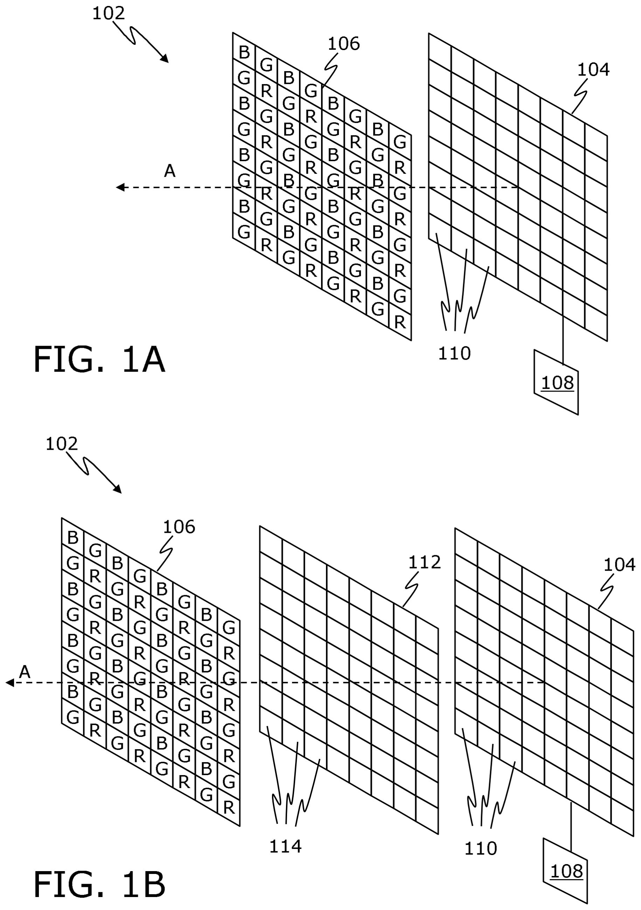

FIGs. 1A-1C are simplified exploded views of a display device **102,** in accordance with different embodiments of the present disclosure. The display device **102** comprises a light-emitting unit **104** and a colour filter array **106** arranged on an optical path **A** of the light-emitting unit **104**. The light-emitting unit **104** comprises a plurality of red light sources, a plurality of green light sources and a plurality of blue light sources, which are collectively marked as **110.** The plurality of red light sources are employed to emit red light having at least one first wavelength corresponding to red colour; the plurality of green light sources are employed to emit green light having at least one second wavelength corresponding to green colour; the plurality of blue light sources are employed to emit blue light having at least one third wavelength corresponding to blue colour. The colour filter array **106** comprises red colour filters **R** whose wavelength band includes the at least one first wavelength, green colour filters **G** whose wavelength band includes the at least one second wavelength, and blue colour filters **B** whose wavelength band includes the at least one third wavelength. An example arrangement of the red colour filters **R,** the green colour filters **G** and the blue colour filters **B** has been shown in FIGs. 1A-1C, for illustration purposes only.

In a first example implementation of the display device **102,** the plurality of red light sources, the plurality of green light sources and the plurality of blue light sources are arranged in a form of an array. Different sub-implementations of the first example implementation are shown in FIGs. 1A and 1B.

With reference to FIG. 1A, in a first sub-implementation of the first example implementation, the plurality of red light sources, the plurality of green light sources and the plurality of blue light sources are individually controllable. In this regard, a given light source of a given colour can be controlled to adjust the intensity of light emitted by the given light source. The light sources can be controlled by a second drive circuit (not shown). When displaying an image, at least one processor (depicted as a processor **108**) is configured to:

generate drive signals for controlling individual ones of the plurality of red light sources, individual ones of the plurality of green light sources and individual ones of the plurality of blue light sources, based on the image; and

send the drive signals to the second drive circuit.

With reference to FIG. 1B, in a second sub-implementation of the first example implementation, the display device **102** further comprises an active panel **112.**

In a second example implementation of the display device **102,** the light-emitting unit **104** is implemented as an edge-lit backlight unit. In the second sub-implementation, the display device **102** further comprises the active panel **112.** The second example implementation has not been shown in the figures, for the sake of simplicity.

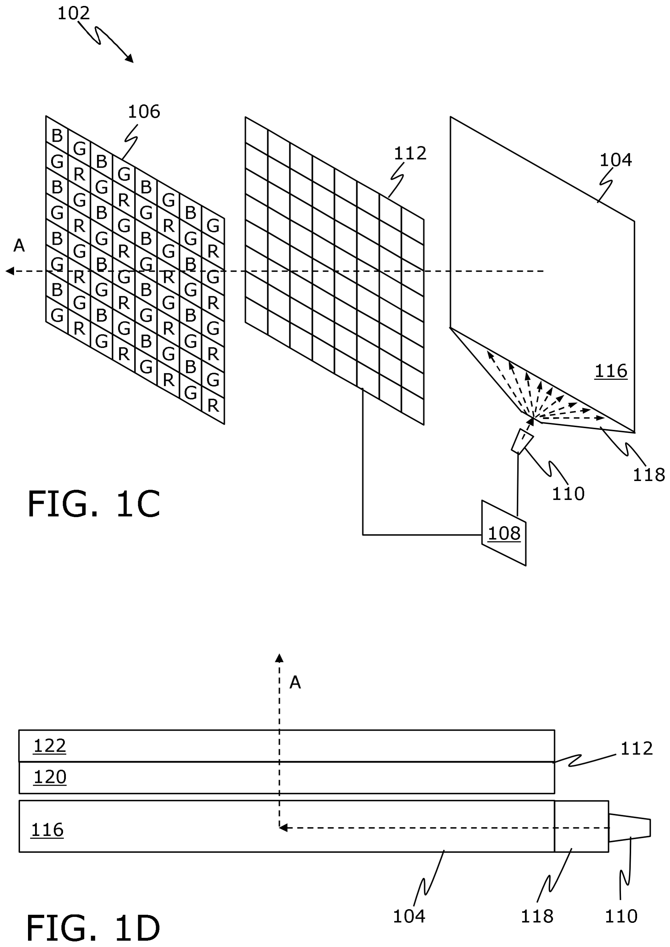

FIG. 1C depicts a third example implementation of the display device **102,** wherein the plurality of red light sources, the plurality of green light sources and the plurality of blue light sources (marked as **110**) are implemented as a plurality of red laser light sources, a plurality of green laser light sources and a plurality of blue laser light sources, respectively, wherein the light-emitting unit **104** further comprises a light guide **116** employed to guide the red light, the green light and the blue light towards the colour filter array **106.** In the third example implementation, the display device **102** further comprises the active panel **112.**

FIG. 1D depicts a bottom view of the display device **102,** in accordance with the third example implementation. As shown, the active panel **112** comprises an LC layer **120** comprising the plurality of LC cells **114,** a linear polarizer **122** arranged on an optical path of the LC layer **120,** and a first drive circuit (not shown) employed to individually control the plurality of LC cells **114** of the LC layer **120.** In this regard, when displaying an image, the processor **108** is configured to:

generate drive signals for controlling the plurality of LC cells **114** of the LC layer **120** in the active panel **112,** based on the image; and

send the drive signals to the first drive circuit of the active panel **112,** wherein the plurality of LC cells **114** of the LC layer **120** are controlled individually by the first drive circuit using the drive signals, to adjust a polarization of light passing therethrough. This allows for modulating the intensity of the light passing through individual ones of these LC cells **114.**

Optionally, in the third example implementation, the plurality of red laser light sources, the plurality of green laser light sources and the plurality of blue laser light sources are arranged together as a single group in a proximity of an edge of the light guide **116,** wherein the light-emitting unit **104** further comprises a spread-out waveguide **118** that is employed to spread the red light, the green light and the blue light across the edge of the light guide **116.**

It may be understood by a person skilled in the art that FIGs. 1A-1D merely depict various example implementations (out of many possible implementations) of the display device **102,** for sake of clarity, which should not unduly limit the scope of the claims herein. It is to be understood that the specific implementation of the display device **102** is not to be construed as limiting it to specific numbers or types of laser light sources, active panels, light guides, colour filter arrays and processors. The person skilled in the art will recognize many variations, alternatives, and modifications of embodiments of the present disclosure.

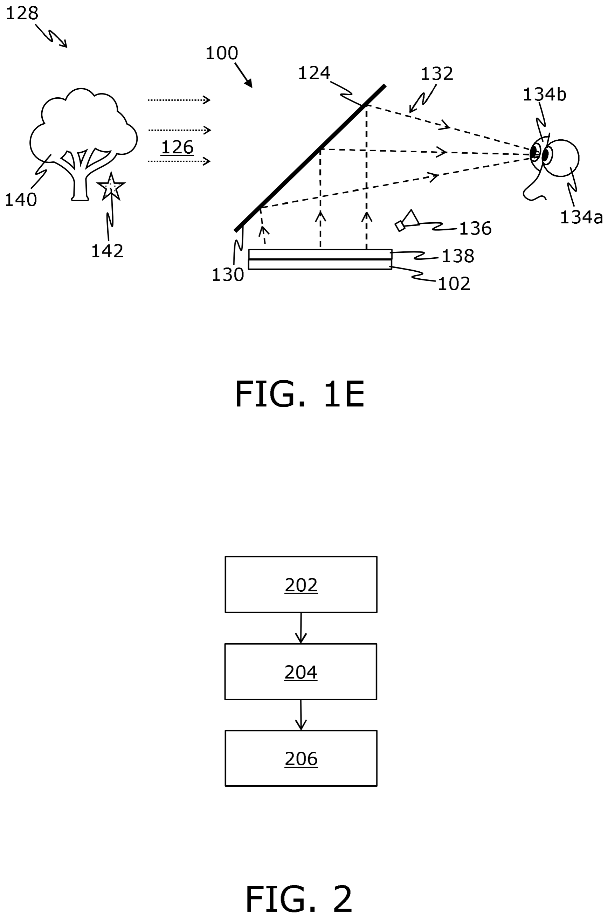

Referring to FIG. 1E, illustrated is an exemplary environment in which a system **100** for displaying images can be employed, in accordance with an embodiment of the present disclosure. The system **100** comprises the display device **102,** an optical combiner **124** and the at least one processor (namely, the processor **108**). The optical combiner **124** is arranged on an optical path of the display device **102** and on an optical path of a real-world light field **126** of a real-world environment **128.** A semi-reflective surface **130** of the optical combiner has a multi-band reflective coating that is configured to selectively reflect the red light having the at least one first wavelength, the green light having the at least one second wavelength, and the blue light having the at least one third wavelength.

The processor **108** is configured to:

generate or retrieve an image to be displayed via the display device **102;** and

display the image via the display device **102,** for producing a synthetic light field **132,** wherein the optical combiner **124** is employed to selectively reflect the synthetic light field **132** towards eyes **134a-134b** of at least one user, whilst optically combining the real-world light field **126** with the synthetic light field **132.**

Optionally, the system **100** further comprises tracking means **136** and a multiscopic optical element **138** arranged on the optical path of the display device **102**. The processor **108** is configured to:

determine a relative location of a first eye **134a** and of a second eye **134b** of the at least one user with respect to the optical combiner **124,** by utilising the tracking means **136,** wherein the image is a light field image that is generated or retrieved based on the relative location of the first eye **134a** and of the second eye **134b** of the at least one user with respect to the optical combiner **124;** and

control the multiscopic optical element **138,** based on the relative location of the first eye **134a** and of the second eye **134b** of the at least one user with respect to the optical combiner **124,** to direct light rays corresponding to a first set of pixels and a second set of pixels of the light field image to produce a first part and a second part of the synthetic light field **132,** respectively, for the first eye **134a** and the second eye **134b** of the at least one user.

In the real-world environment **128,** there are one or more real-world objects, depicted as a real-world object **140** (shown as a tree, for illustration purposes only). The first part and the second part of the synthetic light field **132** present at least one virtual object, depicted as a virtual object **142** (shown as a star, for illustration purposes only).

FIGs. 1A-1E are merely examples, which should not unduly limit the scope of the claims herein. A person skilled in the art will recognize many variations, alternatives, and modifications of embodiments of the present disclosure.

Referring to FIG. 2, illustrated are steps of a method for displaying images, in accordance with an embodiment of the present disclosure. At step **202,** an image to be displayed via a display device is generated or retrieved. The display device comprises a light-emitting unit and a colour filter array arranged on an optical path of the light-emitting unit, wherein the light-emitting unit comprises a plurality of red light sources, a plurality of green light sources, and a plurality of blue light sources, and wherein the colour filter array comprises red colour filters whose wavelength band includes at least one first wavelength corresponding to red colour, green colour filters whose wavelength band includes at least one second wavelength corresponding to green colour, and blue colour filters whose wavelength band includes at least one third wavelength corresponding to blue colour.

At step **204,** the image is displayed via the display device, for producing a synthetic light field, by:

emitting, from the plurality of red light sources, red light having the at least one first wavelength;

emitting, from the plurality of green light sources, green light having the at least one second wavelength; and

emitting, from the plurality of blue light sources, blue light having the at least one third wavelength.

At step **206,** an optical combiner, arranged on an optical path of the display device and on an optical path of a real-world light field of a real-world environment, is employed to selectively reflect the synthetic light field towards eyes of at least one user, whilst optically combining the real-world light field with the synthetic light field. A semi-reflective surface of the optical combiner has a multi-band reflective coating that is configured to selectively reflect the red light having the at least one first wavelength, the green light having the at least one second wavelength, and the blue light having the at least one third wavelength.

The aforementioned steps are only illustrative and other alternatives can also be provided where one or more steps are added, one or more steps are removed, or one or more steps are provided in a different sequence without departing from the scope of the claims herein.

**Claims**

**1.** A system (100) comprising:

a display device (102) comprising:

a light-emitting unit (104) comprising:

a plurality of red light sources (110) employed to emit red light having at least one first wavelength corresponding to red colour;
a plurality of green light sources (110) employed to emit green light having at least one second wavelength corresponding to green colour; and
a plurality of blue light sources (110) employed to emit blue light having at least one third wavelength corresponding to blue colour; and

a colour filter array (106) arranged on an optical path of the light-emitting unit, the colour filter array comprising:

red colour filters (R) whose wavelength band includes the at least one first wavelength;
green colour filters (G) whose wavelength band includes the at least one second wavelength; and
blue colour filters (B) whose wavelength band includes the at least one third wavelength;

an optical combiner (124) arranged on an optical path of the display device and on an optical path of a real-world light field (126) of a real-world environment (128), wherein a semi-reflective surface (130) of the optical combiner has a multi-band reflective coating that is configured to selectively reflect the red light having the at least one first wavelength, the green light having the at least one second wavelength, and the blue light having the at least one third wavelength; and
at least one processor (108) configured to:

generate or retrieve an image to be displayed via the display device; and
display the image via the display device, for producing a synthetic light field (132), wherein the optical combiner is employed to selectively reflect the synthetic light field towards eyes of at least one user, whilst optically combining the real-world light field with the synthetic light field.

2.  The system (100) of claim 1, wherein theat least one first wavelength comprises two or more first wavelengths corresponding to the red colour, wherein the multi-band reflective coating is configured to reflect each of the two or more first wavelengths partially.

3.  The system (100) of any of the preceding claims, wherein the at least one second wavelength comprises two or more second wavelengths corresponding to the green colour, wherein the multi-band reflective coating is configured to reflect each of the two or more second wavelengths partially.

4.  The system (100) of any of the preceding claims, wherein the at least one third wavelength comprises two or more third wavelengths corresponding to the blue colour, wherein the multi-band reflective coating is configured to reflect each of the two or more third wavelengths partially.

5.  The system (100) of any of the preceding claims, wherein the plurality of red light sources, the plurality of green light sources and the plurality of blue light sources are implemented as a plurality of red laser light sources, a plurality of green laser light sources and a plurality of blue laser light sources, respectively,

wherein the light-emitting unit (104) further comprises a light guide (116) employed to guide the red light, the green light and the blue light towards the colour filter array (106),
wherein the display device (102) further comprises an active panel (112) comprising:

a liquid crystal (LC) layer (120) comprising a plurality of LC cells (114);
a linear polarizer (122) arranged on an optical path of the LC layer; and
a first drive circuit employed to individually control the plurality of LC cells of the LC layer,

wherein when displaying the image, the at least one processor (108) is configured to:

generate drive signals for controlling the plurality of LC cells of the LC layer in the active panel, based on the image; and

send the drive signals to the first drive circuit of the active panel, wherein the plurality of LC cells of the LC layer are controlled individually by the first drive circuit using the drive signals, to adjust a polarization of light passing therethrough.

6. The system (100) of claim 5, wherein the plurality of red laser light sources, the plurality of green laser light sources and the plurality of blue laser light sources are arranged together as a single group in a proximity of an edge of the light guide (116), wherein the light-emitting unit (104) further comprises a spread-out waveguide (118) that is employed to spread the red light, the green light and the blue light across the edge of the light guide.

7. The system (100) of claim 5, wherein the plurality of red laser light sources, the plurality of green laser light sources and the plurality of blue laser light sources are arranged as a plurality of groups, each group comprising at least one of the plurality of red laser light sources, at least one of the plurality of green laser light sources and at least one of the plurality of blue laser light sources.

8. The system (100) of claim 7, wherein the plurality of groups are arranged in a side-by-side manner.

9. The system (100) of claim 7 or 8, wherein at least two of the plurality of groups are arranged at different edges of the light guide (116).

10. The system (100) of any of the preceding claims, further comprising tracking means (136) and a multiscopic optical element (138) arranged on the optical path of the display device (102), wherein the at least one processor (108) is configured to:

determine a relative location of a first eye (134a) and of a second eye (134b) of the at least one user with respect to the optical combiner (124), by utilising the tracking means, wherein the image is a light field image that is generated or retrieved based on the relative location of the first eye and of the second eye of the at least one user with respect to the optical combiner; and
control the multiscopic optical element, based on the relative location of the first eye and of the second eye of the at least one user with respect to the optical combiner, to direct light corresponding to a first set of pixels and a second set of pixels of the light field image to produce a first part and a second part of the synthetic light field (132), respectively, for the first eye and the second eye of the at least one user.

11. A method comprising:

generating or retrieving an image to be displayed via a display device (102), the display device comprising a light-emitting unit (104) and a colour filter array (106) arranged on an optical path of the light-emitting unit, wherein the light-emitting unit comprises a plurality of red light sources, a plurality of green light sources, and a plurality of blue light sources, and wherein the colour filter array comprises red colour filters whose wavelength band includes at least one first wavelength corresponding to red colour, green colour filters whose wavelength band includes at least one second wavelength corresponding to green colour, and blue colour filters whose wavelength band includes at least one third wavelength corresponding to blue colour;
displaying the image via the display device, for producing a synthetic light field (132), by:

emitting, from the plurality of red light sources, red light having the at least one first wavelength;
emitting, from the plurality of green light sources, green light having the at least one second wavelength; and
emitting, from the plurality of blue light sources, blue light having the at least one third wavelength; and

employing an optical combiner (124), arranged on an optical path of the display device and on an optical path of a real-world light field (126) of a real-world environment (128), to selectively reflect the synthetic light field towards eyes of at least one user, whilst optically combining the real-world light field with the synthetic light field, wherein a semi-reflective surface (130) of the optical combiner has a multi-band reflective coating that is configured to selectively reflect the red light having the at least one first wavelength, the green light having the at least one second wavelength, and the blue light having the at least one third wavelength.

12. The method of claim 11, wherein the at least one first wavelength comprises two or more first wavelengths corresponding to the red colour, wherein the multi-band reflective coating is configured to reflect each of the two or more first wavelengths partially.

13. The method of any of claims 11-12, wherein the at least one second wavelength comprises two or more second wavelengths corresponding to the green colour, wherein the multi-band reflective coating is configured to reflect each of the two or more second wavelengths partially.

14. The method of any of claims 11-13, wherein the at least one third wavelength comprises two or more third wavelengths corresponding to the blue colour, wherein the multi-band reflective coating is configured to reflect each of the two or more third wavelengths partially.

15. The method of any of claims 11-14, wherein the plurality of red light sources, the plurality of green light sources and the plurality of blue light sources are implemented as a plurality of red laser light sources, a plurality of green laser light sources and a plurality of blue laser light sources, respectively,

wherein the light-emitting unit (104) further comprises a light guide (116) employed to guide the red light, the green light and the blue light towards the colour filter array (106),
wherein the display device (102) further comprises an active panel (112) comprising:

a liquid crystal (LC) layer (120) comprising a plurality of LC cells (114);
a linear polarizer (122) arranged on an optical path of the LC layer; and
a first drive circuit employed to individually control the plurality of LC cells of the LC layer,

wherein the step of displaying the image comprises:

generating drive signals for controlling the plurality of LC cells of the LC layer in the active panel, based on the image;
sending the drive signals to the first drive circuit of the active panel; and
controlling, via the first drive circuit, individual ones of the plurality of LC cells of the LC layer using the drive signals, to adjust a polarization of light passing therethrough.

FIG. 1A

FIG. 1B

FIG. 1C

FIG. 1D

FIG. 1E

FIG. 2

| | Europäisches Patentamt |
| | European Patent Office |
| | Office européen des brevets |

# EUROPEAN SEARCH REPORT

**Application Number**

EP 25 21 8952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 088 685 B1 (AHARONI RAMI [IL] ET AL) 2 October 2018 (2018-10-02) | 1-5,7-9, 11-15 | INV. F21V8/00 G02B27/01 |
| Y | * column 5, line 48 - column 8, line 65; figures 1-4 * <br> * column 20, line 44 - line 50; claims 1,7; figure 9B * | 6,10 | |
| | ----- | | |
| Y | US 2022/413207 A1 (KIRILLOV BORIS [AT] ET AL) 29 December 2022 (2022-12-29) <br> * abstract * <br> * paragraphs [0039] - [0052]; figures 2A-2D * | 6 | |
| | ----- | | |
| Y | US 2012/218481 A1 (POPOVICH MILAN MOMCILO [GB] ET AL) 30 August 2012 (2012-08-30) <br> * paragraph [0088]; figure 2 * | 6 | |
| | ----- | | |
| Y | US 2013/101253 A1 (POPOVICH MILAN MOMCILO [GB] ET AL) 25 April 2013 (2013-04-25) <br> * paragraph [0063]; figure 2 * | 6 | |
| | ----- | | TECHNICAL FIELDS SEARCHED (IPC) |
| Y | US 2007/041684 A1 (POPOVICH MILAN M [GB] ET AL) 22 February 2007 (2007-02-22) <br> * paragraph [0020]; figure 2 * | 6 | G02B |
| | ----- | | |
| Y | US 2004/165371 A1 (KITAMURA ATSUSHI [JP] ET AL) 26 August 2004 (2004-08-26) <br> * abstract * <br> * paragraphs [0032] - [0042]; figures 1-4 * | 6 | |
| | ----- | | |
| Y | JP 2005 339806 A (SEIKO INSTR INC) 8 December 2005 (2005-12-08) <br> * abstract * <br> * paragraphs [0012] - [0015]; figures 1(a)-1(c) * | 6 | |
| | ----- | | |
| | -/-- | | |

The present search report has been drawn up for all claims

| Place of search | Date of completion of the search | Examiner |
|---|---|---|
| The Hague | 8 May 2026 | Cohen, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 21 8952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 12 113 956 B1 (STRANDBORG MIKKO [FI]) 8 October 2024 (2024-10-08) | 10 | |
| A | * column 2, line 45 - column 3, line 53 * <br> * column 5, line 7 - line 60 * <br> * column 9, line 20 - line 38 * <br> ----- | 5,15 | |

**TECHNICAL FIELDS SEARCHED (IPC)**

The present search report has been drawn up for all claims

| Place of search | Date of completion of the search | Examiner |
|---|---|---|
| The Hague | 8 May 2026 | Cohen, Adam |

EPO FORM 1503 03.82 (P04C01)

page 2 of 2

## ANNEX TO THE EUROPEAN SEARCH REPORT
## ON EUROPEAN PATENT APPLICATION NO.

EP 25 21 8952

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2026

| Patent document cited in search report | | Publication date | Patent family member(s) | | Publication date |
|---|---|---|---|---|---|
| US 10088685 | B1 | 02-10-2018 | US 10088685 B1 | | 02-10-2018 |
| | | | US 10520735 B1 | | 31-12-2019 |
| US 2022413207 | A1 | 29-12-2022 | CN 115542542 A | | 30-12-2022 |
| | | | DE 102022116121 A1 | | 29-12-2022 |
| | | | US 2022413207 A1 | | 29-12-2022 |
| | | | US 2025044498 A1 | | 06-02-2025 |
| US 2012218481 | A1 | 30-08-2012 | EP 2494388 A1 | | 05-09-2012 |
| | | | US 2012218481 A1 | | 30-08-2012 |
| | | | WO 2011051660 A1 | | 05-05-2011 |
| US 2013101253 | A1 | 25-04-2013 | NONE | | |
| US 2007041684 | A1 | 22-02-2007 | US 2007041684 A1 | | 22-02-2007 |
| | | | WO 2004102226 A2 | | 25-11-2004 |
| US 2004165371 | A1 | 26-08-2004 | JP 2004253317 A | | 09-09-2004 |
| | | | US 2004165371 A1 | | 26-08-2004 |
| JP 2005339806 | A | 08-12-2005 | JP 4510516 B2 | | 28-07-2010 |
| | | | JP 2005339806 A | | 08-12-2005 |
| US 12113956 | B1 | 08-10-2024 | EP 4637137 A1 | | 22-10-2025 |
| | | | US 12113956 B1 | | 08-10-2024 |

EPO FORM P0459

For more details about this annex : see Official Journal of the European Patent Office, No. 12/82